# EUROPÄISCHE PATENTSCHRIFT

(11) **EP 3 551 907 B1**
(45) Veröffentlichungstag und Bekanntmachung des Hinweises auf die Patenterteilung: **05.01.2022**
(21) Anmeldenummer: 17803787.5
(22) Anmeldetag: 22.11.2017
(51) Int. Cl.: F16F 9/06, F16F 9/32

(54) **HYDROPNEUMATISCHE KOLBENZYLINDERANORDNUNG**
HYDROPNEUMATIC PISTON-CYLINDER ASSEMBLY
SYSTÈME CYLINDRE-PISTON HYDROPNEUMATIQUE

(30) Priorität: 10.12.2016 DE 102016014779
(43) Veröffentlichungstag der Anmeldung: 16.10.2019
(73) Patentinhaber: Hydac Technology GmbH, 66280 Sulzbach (DE)
(72) Erfinder: WEBER, Norbert, 66125 Saarbrücken (DE)
(74) Vertreter: Bartels und Partner, Patentanwälte
(86) Internationale Anmeldenummer: PCT/EP2017/001364
(87) Internationale Veröffentlichungsnummer: WO 2018/103881

(56) Entgegenhaltungen:
- EP-A2- 1 998 070
- WO-A1-2016/076555
- WO-A1-2017/010199
- CN-A- 106 090 103
- DE-A1- 10 352 697
- DE-A1-102011 010 070
- DE-A1-102011 117 752
- DE-A1-102013 009 987
- DE-A1-102013 110 920
- DE-A1-102015 200 444
- DE-A1-102015 202 839
- DE-B3- 10 320 208
- DE-U1- 20 102 031
- FR-A1- 2 469 618
- FR-E- 6 543
- US-A1- 2006 054 435
- US-A1- 2011 198 787
- US-A1- 2012 048 665
- US-A1- 2014 288 776

## Beschreibung

Die Erfindung betrifft eine hydropneumatische Kolbenzylinderanordnung, insbesondere zur Verwendung als Federbein in Fahrzeug-Federungssystemen, mit den Merkmalen im Oberbegriff von Anspruch 1.

Achsfederungen mit durch hydropneumatische Kolbenzylinderanordnungen gebildeten Federbeinen sind bekannt und kommen häufig bei Nutzfahrzeugen zum Einsatz. Als diesbezüglichen Stand der Technik zeigt die DE 10 2009 035 570 A1 eine Kolbenzylinderanordnung der eingangs genannten Gattung. Für den Einsatz bei Achsfederungen ist die bekannte Kolbenzylinderanordnung insofern vorteilhaft, als die unmittelbare Wirkverbindung zwischen dem Druckfluid im Zylinderraum und dem Federspeicher die Möglichkeit eröffnet, diesen als Bestandteil in die Kolbenzylinderanordnung zu integrieren. Der Wegfall externer Speicher ermöglicht eine kompakte Bauweise, die den Einsatz bei Achsfederungen von Fahrzeugen, wo üblicherweise ein begrenzter Einbauraum zur Verfügung steht, begünstigt. Der Federspeicher ist bei der erwähnten, bekannten Anordnung durch einen Membranspeicher gebildet, der ein Speichergehäuse aus einer ersten, halbkugelartig gestalteten Gehäuseschale und einer zweiten, ebenfalls halbkugelartig gestalteten Gehäuseschale zusammengesetzt ist, die miteinander verschweißt sind und von denen die zweite Gehäuseschale einen Abschlussdeckel des Zylindergehäuses bildet. Die Membran ist an der Innenwand der ersten Gehäuseschale festgelegt und ist an der dem Kolben zugewandten Seite mit dem Druck des Hydraulikfluids beaufschlagt, das über eine in der ersten Gehäuseschale gebildeten Öffnung vom Zylinderraum her auf die Membran einwirkt.

Die Herstellung der halbkugelförmigen Gehäuseschalen, der Schweißverbindung zwischen den Schalen sowie die Ausbildung einer Ringnut an der Innenseite der ersten Schale zur Festlegung der Membran mittels eines den Umfangswulst der Membran umschließenden, in der Ringnut aufgenommenen Befestigungsringes erschwert wegen des erforderlichen Fertigungsaufwands die rationelle und kostengünstige Herstellung der bekannten Anordnung.

Die US 2006/0054435 A1 beschreibt eine hydropneumatische Kolbenzylinderanordnung, insbesondere zur Verwendung als Federbein in Fahrzeug-Federungssystemen, mit einem Zylindergehäuse und einem in dessen mit einem Hydraulikfluid gefüllten Zylinderraum axial bewegbar geführten Kolben, der an einer Kolbenseite eine Kolbenstange aufweist, die aus einem Ende des Zylinderraums abgedichtet herausgeführt ist, wobei das Hydraulikfluid, das sich im Zylinderraum auf der Seite des von der Kolbenstange abgewandten Kolbenbodens befindet, in Wirkverbindung mit einem pneumatischen Federspeicher bringbar ist, wobei der pneumatische Federspeicher ein Kolbenspeicher ist, der in dem Zylindergehäuse angeordnet ist, und wobei der Kolbenspeicher mit seinem Speichergehäuse außenumfangsseitig in dem Zylindergehäuse aufgenommen ist.

Weitere hydropneumatische Kolbenzylinderanordnungen gehen aus der DE 10 2011 010 070 A1, der US 2011/0198787 A1, der DE 103 52 697 A1, der DE 10 2013 110 920 A1, der DE 10 2011 117 752 A1, der WO 2017/ 010199 A1, der CN 106090103, der US 2014/0288776 A1, der DE 10 2015 200 444 A1, der US 2012/0048665 A1, der EP 1 998 070 A2, der DE 201 02 031 U1, der DE 10 2013 009 987 A1, der DE 10 2015 202 839 A1, der DE 103 20 208 B3 und der FR 2 469 618 A1 hervor.

Im Hinblick auf diese Problematik stellt sich die Erfindung die Aufgabe, eine Kolbenzylinderanordnung der eingangs genannten Gattung zur Verfügung zu stellen, die sich, bei Beibehaltung der Vorteile der erwähnten bekannten Anordnung, durch eine besonders einfache, rationelle und kostengünstig herstellbare Bauweise auszeichnet.

Erfindungsgemäß ist diese Aufgabe durch eine hydropneumatische Kolbenzylinderanordnung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Zylinderraum an jedem Endbereich eine Fluidanschlussstelle aufweist, die mit Druck beaufschlagt dem Ausfahren der Kolbenstangeneinheit dienen; dass eine der Anschlussstellen in einen einen Teil des Zylinderraumes bildenden Fluidraum einmündet, der in der Ausgangslage von den beiden einander benachbart gegenüberliegenden Kolben freigelassen ist; und dass das Speichergehäuse des Kolbenspeichers in seiner Einbausituation mit einem geringen Überstand in eine Gehäusebohrung der einen Fluidanschlussstelle hineinragt.

Es ist ferner vorgesehen, dass der pneumatische Federspeicher ein Kolbenspeicher ist, der in dem Zylindergehäuse angeordnet ist. Im Vergleich zu dem Membranspeicher der bekannten Anordnung mit aus verschweißten Gehäuseschalen gebildetem Speichergehäuse und der Einrichtung zur Festlegung der Membran in der einen Gehäuseschale stellt der bei der Erfindung vorgesehene Kolbenspeicher eine wesentlich einfachere Baueinheit dar, bestehend lediglich aus einem Freikolben, der im Speichergehäuse, das durch ein einfaches Zylinderrohr gebildet ist, geführt ist, und aus einem das Speichergehäuse an einem Ende abschließenden Bodenteil. Bei der geringen Anzahl erforderlicher und einfach und rationell herstellbarer Einzelteile gestaltet sich die Herstellung des Kolbenspeichers kostengünstig, so dass sich für die Gesamtanordnung geringe Herstellkosten ergeben.

Der Kolbenspeicher ist mit seinem Speichergehäuse außenumfangsseitig in dem Zylindergehäuse aufgenommen. Bei der Montage braucht der Kolbenspeicher daher lediglich von einem Ende des rohrförmigen Zylindergehäuses her in dieses eingesetzt zu werden. Der Einbau eines kompletten Kolbenspeichers ins jeweilige Zylindergehäuse eröffnet auch die vorteilhafte Möglichkeit, den Kolbenspeicher als Gleichteil für Zylindergehäuse unterschiedlicher Federbeinlänge zu fertigen. Dies bedeutet, dass nur ein einziger und relativ kleiner Speicher nach der Druckbehältervorschrift gefertigt und abgenommen werden muss, was eine Kostenersparnis ermöglicht.

Für die Druckversorgung des Zylinderraums mit Hydraulikfluid weist der Zylinderraum an jedem Endbereich eine Fluidanschlussstelle auf, über die das Druckniveau, wie bei Federbeinen üblich, derart einstellbar ist, dass die Kolbenstange bei der Betriebsbelastung beim jeweiligen Einsatz in gewünschtem Maße ausgefahren ist und ein Federweg zur Verfügung steht. Für die Fluidverbindung zwischen den an die eine Kolbenseite und die andere Kolbenseite angrenzenden Teilen des Zylinderraums sind die Fluidanschlussstellen über eine Leitung miteinander verbunden, die eine Blenden- oder Drosseleinrichtung enthält, deren Auslegung die Federkennlinie und -dämpfung der Anordnung bestimmt.

Eine der Anschlussstellen mündet in einem einen Teil des Zylinderraums bildenden Fluidraum ein, der in der Ausgangslage von den beiden einander benachbart gegenüberliegenden Kolben freigelassen ist. Auch bei voll eingefahrener Kolbenstangeneinheit hat dadurch der an den Kolben des Kolbenspeichers angrenzende Teil des Zylinderraums ein Restvolumen.

Das Speichergehäuse des Kolbenspeichers ragt in seiner Einbausituation mit einem geringen Überstand in die Gehäusebohrung der einen Anschlussstelle hinein. Dadurch ist für die Fluidströmung bei den Arbeitsbewegungen der Kolbenstangeneinheit eine Anströmkante für das Hydraulikfluid gebildet.

Mit Vorteil kann die Anordnung so getroffen sein, dass zumindest in einer Ausgangslage der aus Kolben und Kolbenstange gebildeten Kolbenstangeneinheit, bei der diese sich in einer eingefahrenen Position im Zylindergehäuse befindet, der Kolben derselben in stirnseitiger Anlage mit dem Kolben des Kolbenspeichers ist. Dadurch ergibt sich bei voll eingefahrener Stellung der Kolbenstange eine minimale Gesamtbaulänge.

Bei vorteilhaften Ausführungsbeispielen stützt sich der Kolbenspeicher mit einem Bodenteil mit einer Gasfülleinrichtung am einen unteren Gehäusedeckel bildenden Boden des Zylindergehäuses ab. Dabei kann die Anordnung so getroffen sein, dass im Bereich der bodenseitigen Abstützung des Kolbenspeichers der Boden des Zylindergehäuses eine Ausnehmung aufweist, in der zumindest ein Teil der vorspringenden Gasfülleinrichtung für die Gasseite des Kolbenspeichers aufgenommen ist. Die Gasfülleinrichtung kann ein Füllventil üblicher Bauweise aufweisen.

Der Kolben des Kolbenspeichers kann innerhalb des Speichergehäuses in seiner Ausgangslage, die dem größten Volumen der Gasseite entspricht, mittels einer Festlegeeinrichtung, wie einem Sprengring, gehalten sein.

Zu diesem Zweck kann die Anordnung so getroffen sein, dass bei der eingefahrenen Ausgangslage der Kolben der Kolbenstangeneinheit am Kolben des Kolbenspeichers mit einer Fläche zur Anlage kommt, die kleiner ist als die stirnseitige Fläche des Kolbens des Kolbenspeichers.

Mit Vorteil kann die Stange der Kolbenstangeneinheit in Richtung der anderen Anschlussstelle im Zylindergehäuse gestuft ausgebildet sein. Dadurch hat auch der an diese Anschlussstelle angrenzende Teil des Zylinderraums bei der voll ausgefahrenen Endstellung der Kolbenstange ein Restvolumen.

Bei vorteilhaften Ausführungsbeispielen weist das Zylindergehäuse zwei Gehäusedeckel auf, die, vom Zylindergehäuse entfernt, das Einsetzen von Kolbenstangeneinheit und Kolbenspeicher erlauben.

Mit besonderem Vorteil ist die Anordnung derart getroffen, dass der Außendurchmesser des Kolbens der Kolbenstangeneinheit an seiner breitesten Stelle gleich dem Außendurchmesser des Speichergehäuses des Kolbenspeichers ist.

Bei der erfindungsgemäßen Anordnung sind die Kolbenstangeneinheit und der Kolbenspeicher auswechselbar im Zylindergehäuse aufgenommen. Die erfindungsgemäße Anordnung zeichnet sich daher auch durch besondere Wartungsfreundlichkeit aus.

Nachstehend ist die Erfindung anhand eines in der Zeichnung dargestellten Ausführungsbeispiels im Einzelnen erläutert. Es zeigen:
- Fig. 1: eine gegenüber der Größe einer praktischen Ausführungsform um den Faktor 2,6 verkleinerte Seitenansicht des Ausführungsbeispiels der erfindungsgemäßen Kolbenzylinderanordnung;
- Fig. 2: einen Längsschnitt des Ausführungsbeispiels entsprechend der Schnittlinie II-II von Fig. 1;
- Fig. 3: einen vergrößert gezeichneten Teilschnitt des in Fig. 2 mit III bezeichneten Bereichs; und
- Fig. 4 und 5: abgeschnittene Teillängsschnitte des Bodenbereichs des Zylindergehäuses gemäß einem zweiten bzw. dritten Ausführungsbeispiel der erfindungsgemäßen Kolbenzylinderanordnung.

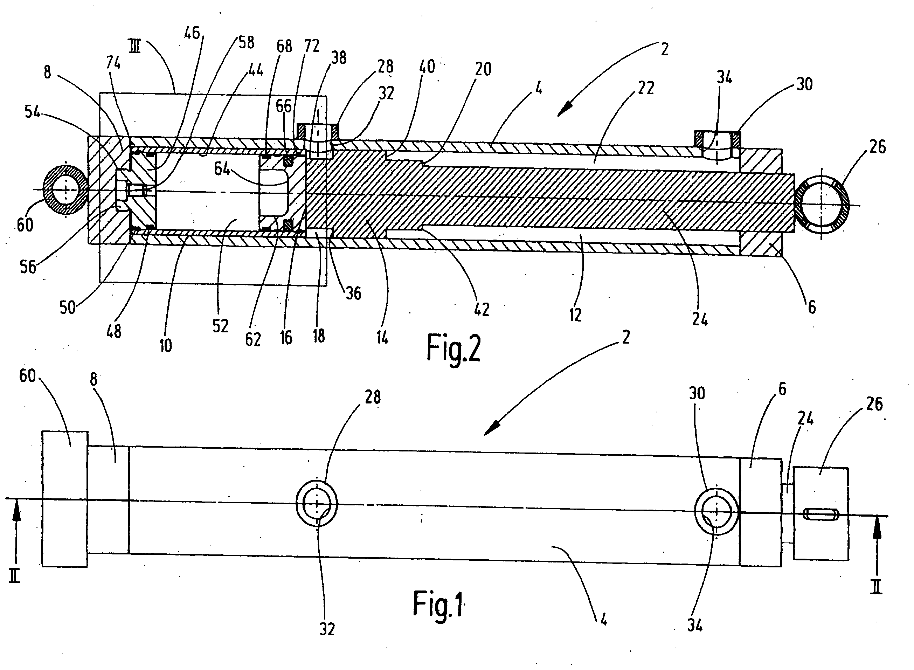

Das in der Zeichnung gezeigte Ausführungsbeispiel der erfindungsgemäßen hydropneumatischen Kolbenzylinderanordnung 2 ist in der Art eines Federbeins zur Verwendung als Fahrzeug-, Stoß- und Schwingungsdämpfer vorgesehen. Wie am besten aus der Schnittdarstellung von Fig. 2 zu ersehen ist, weist die Anordnung 2 ein Zylindergehäuse 4 in Form eines runden Rohrkörpers auf, der an beiden Enden durch einen Gehäusedeckel abgeschlossen ist, von denen der in Fig. 1 und 2 rechts gelegene, obere Gehäusedeckel mit 6 und der gegenüberliegende, bodenseitige Gehäusedeckel mit 8 bezeichnet sind. Der das Speichergehäuse 4 bildende runde Rohrkörper, der über seine gesamte Länge einen gleichbleibenden Innen- und Außendurchmesser besitzt, ist in einen Speicherabschnitt und in einen Hydraulikabschnitt unterteilt. Genauer gesagt, schließt sich an den bodenseitigen Gehäusedeckel 8 ein Kolbenspeicher 10 an, an den sich wiederum ein bis zum oberen Gehäusedeckel 6 reichender Zylinderraum 12 anschließt. Ein im Zylindergehäuse 4 verfahrbar geführter Kolben 14 begrenzt mit seiner einen, dem Kolbenspeicher 10 zugewandten Kolbenseite 16 einen ersten Fluidraum 18 als Teil des Zylinderraums 12, und die andere Kolbenseite 20 begrenzt einen zweiten Fluidraum 22, der sich als zweiter Teil des Zylinderraums 12 bis zum oberen Gehäusedeckel 6 erstreckt. Eine mit dem Kolben 14 einstückige Kolbenstange 24, die sich an die Kolbenseite 20 anschließt, ist durch den oberen Gehäusedeckel 6 abgedichtet nach außen geführt und weist am freien Ende ein Befestigungselement 26 auf, das eine Anlenkstelle für die Verbindung für ein zugeordnetes Fahrwerkteil eines Fahrzeuges bildet. Für die Druckversorgung mit Hydraulikfluid weist das Zylinderrohr des Speichergehäuses 4 an jedem Ende des Zylinderraums 12 je eine Fluidanschlussstelle 28 und 30 auf. Die Anschlussstelle 28 weist in der Wand des Zylindergehäuses 4 eine Anschlussbohrung 32 auf, die am

Übergang des ersten Fluidraums 18 des Zylinderraums 12 zum Kolbenspeicher 10 gelegen ist, und die Anschlussbohrung 34 der Anschlussstelle 30 ist dem oberen Gehäusedeckel 6 benachbart. Der Kolben 14 weist an seiner dem Kolbenspeicher 10 zugewandten Kolbenseite 16 eine Stufe 36 auf, die sich in einem axialen Abstand von der vorderen Stirnfläche, der etwa dem Durchmesser der Anschlussbohrung 32 entspricht, angeordnet ist und durch die sich der Durchmesser des Endabschnitts 38 des Kolbens 14 gegenüber dessen größtem Durchmessers und dem Innendurchmesser des Zylindergehäuses 4 verringert. An der anderen Kolbenseite 20 weist der Kolben 14 zwei weitere Stufen auf, von denen die erste Stufe 40 die gleiche Stufenhöhe besitzt wie die Stufe 36 an der Kolbenseite 16. Die in Richtung der Kolbenstange 24 zur Stufe 40 versetzte weitere Stufe 42 hat eine geringere Stufenhöhe, die den Außendurchmesser des restlichen Teils der Kolbenstange 24 definiert.

Der Kolbenspeicher 10 weist ein Speichergehäuse 44 in Form eines Rundrohres auf, dessen Außendurchmesser dem Innendurchmesser des Zylinderrohres des Zylindergehäuses 4 entspricht, so dass das Speichergehäuse 44 außenumfangsseitig anliegend im Zylindergehäuse 4 aufgenommen ist. An seinem bodenseitigen Ende ist das Speichergehäuse 44 durch ein Bodenteil 46 abgeschlossen, an dem ein Dichtelement 48 eine gasdichte Abdichtung des angrenzenden Speicherraums 52 bildet. Das Bodenteil 46 ist mittels eines Sprengringes 50 im Speichergehäuse 44 axial festgelegt. Außerdem stützt sich das Bodenteil 46 des Speichergehäuses 44 am den Boden des Zylindergehäuses 4 bildenden Gehäusedeckel 8 ab. Dieser weist innenseitig eine eine Vertiefung bildende Ausnehmung 54 auf, in der ein vorspringendes Endteil 56 einer Fülleinrichtung 58 verschraubt ist, über die der Speicherraum 52 mit einem Arbeitsgas, vorzugsweise N₂, mit einem beispielsweise 40 bar betragenden Fülldruck befüllbar ist. Während die Fülleinrichtung 58 in der Zeichnung in vereinfachter Form als Verschlussschraube dargestellt ist, versteht sich, dass alternativ ein Füllventil üblicher Bauweise vorgesehen sein kann. Wie die Fig. 1 und 2 zeigen, ist für die Verbindung mit einem Fahrzeugteil an der Außenseite des bodenseitigen Gehäusedeckels 8 ein Rohrkörper 60 angeschweißt, der eine Lagerstelle bildet.

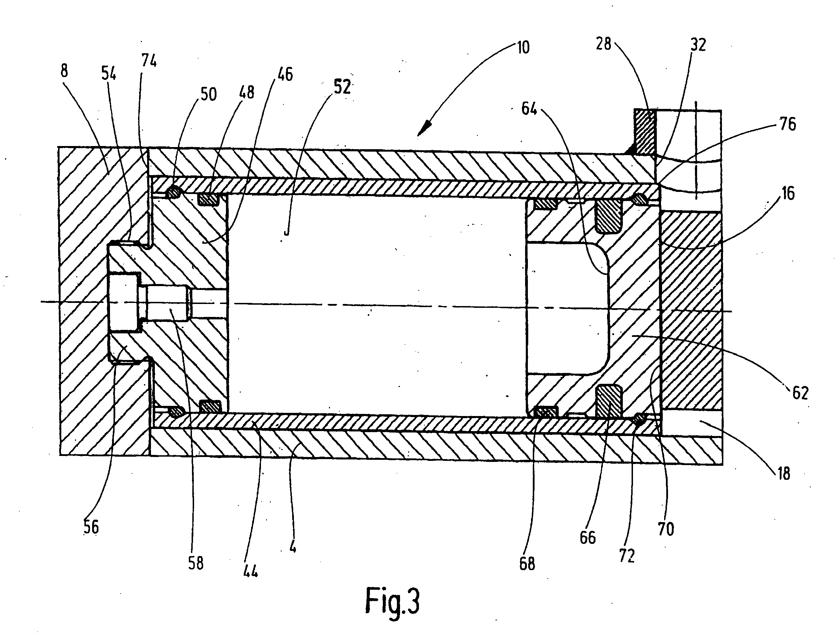

Der als Freikolben im Speichergehäuse 44 verschiebbar geführte Speicherkolben 62 weist in der bei Kolbenspeichern üblichen Weise auf der dem Speicherraum 52 zugewandten Kolbenseite eine innere topfartige Vertiefung 64 auf, die einen Teil des Gasvolumens des Speicherraums 52 aufnimmt. Umfänglich ist der Speicherkolben 62 im Speichergehäuse 44 mittels einer Kolbendichtung 66 abgedichtet und mittels eines Führungsringes 68 geführt. In den Figuren sind der Kolben 14 der Kolbenstangeneinheit und der Speicherkolben 62 jeweils in der Ausgangslage dargestellt, bei der der Zylinderraum 12 drucklos ist oder ein derart geringes Druckniveau aufweist, dass die Kolbenstange 24 unter Einwirkung einer Lastkraft voll eingefahren ist und die stirnseitige Kolbenseite 16 in Anlage mit der Stirnseite 70 des Speicherkolbens 62 ist, der sich bei diesem Betriebszustand in der voll ausgefahrenen Position befindet, die dem größten Volumen des Speicherraums 52 entspricht. In dieser Endposition ist der Speicherkolben 62 durch einen im Speichergehäuse sitzenden Sprengring 72 gesichert. Durch die am Kolben 14 der Kolbenstangeneinheit gebildete Stufe 36 ist der Durchmesser der bei der gezeigten Ausgangslage an der Stirnseite 70 des Speicherkolbens 62 anliegenden Stirnseite 16 des Kolbens 14 geringer als der Durchmesser des Speicherkolbens 62. Für den der Kolbenseite 16 zugeordneten ersten Fluidraum 18 verbleibt daher auch in der gezeigten Ausgangslage, d.h. bei voll eingefahrener Kolbenstangeneinheit und voll ausgefahrener Ausgangslage des Speicherkolbens 62, ein an die Anschlussbohrung 32 der Anschlussstelle 28 angrenzendes Druckfluid-Restvolumen. Bei der in Fig. 3 gezeigten Ausführungsvariante ist die Länge des Speichergehäuses 44 etwas größer als die Länge des umgebenden Zylindergehäuses 4, gemessen vom bodenseitigen Ende 74 bis zur Anschlussbohrung 32, so dass das Speichergehäuse 44 mit einem geringen Überstand, der in Fig. 3 mit 76 bezeichnet ist, in die Anschlussbohrung 32 hineinragt. Beim Betrieb der Kolbenzylinderanordnung als Federbein ist der Zylinderraum 12 über die Anschlussstelle 30 mit Hydraulikfluid mit einem Druckniveau versorgt, bei dem die Kolbenstangeneinheit 14, 24 bei der gegebenen, in Einfahrrichtung wirkenden Lastkraft aufgrund der unterschiedlich großen wirksamen Kolbenflächen von Kolbenseite 16 und Kolbenseite 20 so weit ausgefahren ist, dass ein gewünschter Federweg zur Verfügung steht. Dabei wirkt der Kolbenspeicher 10, der mit seinem Speicherkolben 62 an den ersten Fluidraum 18 angrenzt und durch dessen Fluiddruck gegen die Gasvorspannung im Speicherraum 52 bewegbar ist, mit seinem kompressiblen Gasvolumen als Federspeicher. Entsprechend der Auslegung der Drosselung der (nicht gezeigten) Fluidverbindung der Anschlussstellen 28 und 30 sind die Federkennlinie und -dämpfung in gewünschter Weise vorgebbar.

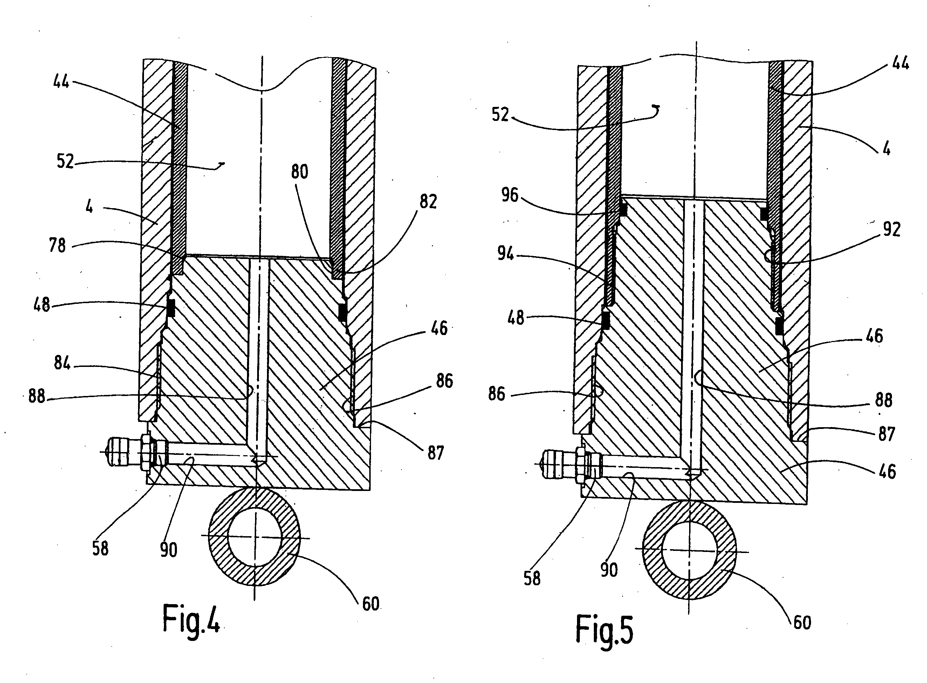

Bei dem in Fig. 4 gezeigten zweiten Ausführungsbeispiel bildet das die Fülleinrichtung aufweisende Bodenteil 46 gleichzeitig den unteren Abschluss des Zylindergehäuses 4 und ersetzt dadurch den unteren Gehäusedeckel 8 des vorigen Ausführungsbeispiels. Dementsprechend ist der als Befestigungselement dienende Rohrkörper 60 unmittelbar am Bodenteil 46 angeschweißt. Dieses besitzt eine größere axiale Länge als das Bodenteil 46 des ersten Ausführungsbeispiels und ist wie dieses mittels eines Dichtelements 48 gegenüber dem Zylindergehäuse 4 abgedichtet. Anders als beim ersten Ausführungsbeispiel ist das Speichergehäuse 44 am Bodenteil 46 nicht durch einen Sprengring 50 gesichert, sondern durch eine Schweißverbindung 78 festgelegt. Diese befindet sich an einem im Außendurchmesser verjüngten Endabschnitt 80, in den das Speichergehäuse 44 mit einem im Innendurchmesser verjüngten Endrand 82 eingreift. Das Zylindergehäuse 4 weist, vom unteren freien Ende ausgehend, einen im Innendurchmesser verringerten Gewindeabschnitt 84 für die Verschraubung mit einem Außengewinde 86 des Bodenteils 46 auf. Als axialen Anschlag für die Verschraubung weist das Bodenteil 46 eine Stufe 87 auf, an der das Ende des Zylindergehäuses 4 anliegt. Für die Verbindung des Speicherraums 52 mit der Fülleinrichtung, die durch ein Füllventil 58 gebildet ist, sind im Bodenteil 46 ein Längskanal 88, der in den Speicherraum 52 mündet, sowie ein sich daran anschließender Querkanal 90 gebildet, der zum seitlich gelegenen Füllventil 58 führt.

Das dritte Ausführungsbeispiel gemäß Fig. 5 unterscheidet sich vom zweiten Ausführungsbeispiel dadurch, dass das in Axialrichtung noch länger ausgebildete Bodenteil 46 mit dem Speichergehäuse 44 nicht verschweißt, sondern durch Verschrauben verbunden ist. Zu diesem Zweck ist am im Außendurchmesser verjüngten Endabschnitt des Bodenteils 46 ein Außengewinde 92 vorgesehen, mit dem ein Innengewinde an einem im Innendurchmesser verjüngten Endabschnitt 94 des Zylindergehäuses 44 verschraubt ist. In der Nähe des axial inneren Endes des Bodenteils 46 ist ein weiterer Dichtring 96 vorgesehen, der eine Abdichtung am nicht verjüngten Bereich des Zylindergehäuses 44 bildet.

## Patentansprüche

1. Hydropneumatische Kolbenzylinderanordnung, insbesondere zur Verwendung als Federbein in Fahrzeug-Federungssystemen, mit einem Zylindergehäuse (4) und einem in dessen mit einem Hydraulikfluid gefüllten Zylinderraum (12) axial bewegbar geführten Kolben (14), der an einer Kolbenseite (20) eine Kolbenstange (24) aufweist, die aus einem Ende des Zylinderraums (12) abgedichtet herausgeführt ist, wobei das Hydraulikfluid, das sich im Zylinderraum (12) auf der Seite des von der Kolbenstange (24) abgewandten Kolbenbodens (16) befindet, in Wirkverbindung mit einem pneumatischen Federspeicher (10) bringbar ist, wobei der pneumatische Federspeicher ein Kolbenspeicher (10) ist, der in dem Zylindergehäuse (4) angeordnet ist, und wobei der Kolbenspeicher (10) mit seinem Speichergehäuse (44) außenumfangsseitig in dem Zylindergehäuse (4) aufgenommen ist,
**dadurch gekennzeichnet,**
**dass** der Zylinderraum (12) an jedem Endbereich eine Fluidanschlussstelle (28, 30) aufweist, die mit Druck beaufschlagt dem Ausfahren der Kolbenstangeneinheit (14, 24) dienen;
**dass** eine (28) der Anschlussstellen (28, 30) in einen einen Teil des Zylinderraumes (12) bildenden Fluidraum (18) einmündet, der in der Ausgangslage von den beiden einander benachbart gegenüberliegenden Kolben (14, 62) freigelassen ist; und
**dass** das Speichergehäuse (44) des Kolbenspeichers (10) in seiner Einbausituation mit einem geringen Überstand (76) in eine Gehäusebohrung (32) der einen Fluidanschlussstelle (28) hineinragt.

2. Anordnung nach Anspruch 1, **dadurch gekennzeichnet, dass** zumindest in einer Ausgangslage der aus Kolben (14) und Kolbenstange (24) gebildeten Kolbenstangeneinheit, bei der diese sich in einer eingefahrenen Position im Zylindergehäuse (4) befindet, der Kolben (14) derselben in stirnseitiger Anlage mit dem Kolben (62) des Kolbenspeichers (10) ist.

3. Anordnung nach Anspruch 1 oder 2, **dadurch gekennzeichnet, dass** sich der Kolbenspeicher (10) mit einem Bodenteil (46) mit einer Gasfülleinrichtung (58) am einen unteren Gehäusedeckel bildenden Boden (8) des Zylindergehäuses (4) abstützt.

4. Anordnung nach einem der vorstehenden Ansprüche, **dadurch gekennzeichnet, dass** im Bereich der bodenseitigen Abstützung des Kolbenspeichers (10) der Boden (8) des Zylindergehäuses (4) eine Ausnehmung (54) aufweist, in der zumindest ein Teil der vorspringenden Gasfülleinrichtung (58) für die Gasseite (52) des Kolbenspeichers (10) aufgenommen ist.

5. Anordnung nach einem der vorstehenden Ansprüche, **dadurch gekennzeichnet, dass** der Kolben (62) des Kolbenspeichers (10) innerhalb des Speichergehäuses (44) in seiner Ausgangslage mittels einer Festlegeeinrichtung, wie einem Sprengring (72), gehalten ist.

6. Anordnung nach einem der vorstehenden Ansprüche, **dadurch gekennzeichnet, dass** bei einem durch Druckbeaufschlagung des Zylinderraums (12) mit einem vorgebbaren Arbeitsdruck bewirkten Ausfahren der Kolbenstangeneinheit (14, 24) der Kolben (62) des Kolbenspeichers (10) gegen den Gasdruck des im Speichergehäuse (44) bevorrateten Arbeitsgases zumindest eine Vorspannung erfährt.

7. Anordnung nach einem der vorstehenden Ansprüche, **dadurch gekennzeichnet, dass** bei der eingefahrenen Ausgangslage der Kolben (14) der Kolbenstangeneinheit (14, 24) am Kolben (62) des Kolbenspeichers (10) mit einer Fläche zur Anlage kommt, die kleiner als die stirnseitige Fläche (70) des Kolbens (62) des Kolbenspeichers (10) ist.

8. Anordnung nach einem der vorstehenden Ansprüche, **dadurch gekennzeichnet, dass** die Kolbenstange (24) der Kolbenstangeneinheit (14, 24) in Richtung der anderen Anschlussstelle (30) im Zylindergehäuse (4) gestuft (40, 42) ausgebildet ist.

9. Anordnung nach einem der vorstehenden Ansprüche, **dadurch gekennzeichnet, dass** das Zylindergehäuse (4) zwei Gehäusedeckel (6, 8) aufweist, die, vom Zylindergehäuse (4) entfernt, das Einsetzen von Kolbenstangeneinheit (14, 24) und Kolbenspeicher (10) erlauben.

10. Anordnung nach einem der vorstehenden Ansprüche, **dadurch gekennzeichnet, dass** der Außendurchmesser des Kolbens (14) der Kolbenstangeneinheit (14, 24) an seiner breitesten Stelle gleich dem Außendurchmesser des Speichergehäuses (44) des Kolbenspeichers (10) ist.

11. Anordnung nach einem der vorstehenden Ansprüche, **dadurch gekennzeichnet, dass** die Kolbenstangeneinheit (14, 24) und der Kolbenspeicher (10) auswechselbar im Zylindergehäuse (4) aufgenommen sind.

## Claims

1. Hydropneumatic piston-cylinder arrangement, particularly for use as a suspension strut in vehicle suspension systems, with a cylinder housing (4) and a piston (14) that is guided such that it can be moved axially in the cylinder chamber (12), which is filled with a hydraulic fluid, of said cylinder housing, said piston comprising a piston rod (24) on one side (20) of the piston, said rod leading out of one end of the cylinder chamber (12) in a sealed manner, the hydraulic fluid, which is contained in the cylinder chamber (12) on the side of the piston base (16) facing away from the piston rod (24), being able to be brought into operative connection with a
pneumatic spring accumulator (10), wherein the pneumatic spring accumulator is a piston accumulator (10), which is arranged in the cylinder housing (4), and
wherein the piston accumulator (10) is received in the cylinder housing (4) with its accumulator housing (44) on the outer circumference,
**characterised in that**
the cylinder chamber (12) comprises a fluid connection point (28, 30) on each end region, said connection points serving to extend the piston rod unit (14, 24) when pressure is applied;
**in that** one (28) of the connection points (28, 30) emerges into a fluid chamber (18) forming part of the cylinder chamber (12), said fluid chamber being released in the original position of the two pistons (14, 62) which are adjacent to and opposite one another; and
**in that**, in its installed position, the accumulator housing (44) of the piston accumulator (10) protrudes into a hole (32) in the housing of one fluid connection point (28) with a small overhang (76).

2. Arrangement according to claim 1, **characterised in that**, at least in an original position of the piston rod unit formed by the piston (14) and piston rod (24), in which said unit is in a retracted position in the cylinder housing (4), the piston (14) of said unit comes into contact with the end face of the piston (62) of the piston accumulator (10).

3. Arrangement according to either claim 1 or claim 2, **characterised in that** the piston accumulator (10) with a base part (46) with a gas filling device (58) is supported on the base (8) of the cylinder housing (4), said base forming a lower housing cover.

4. Arrangement according to any one of the preceding claims, **characterised in that**, in the region of the base support of the piston accumulator (10), the base (8) of the cylinder housing (4) comprises a recess (54), in which at least part of the protruding gas filling device (58) for the gas side of the piston accumulator (10) is received.

5. Arrangement according to any one of the preceding claims, **characterised in that** the piston (62) of the piston accumulator (10) is held inside the accumulator housing (44), in its original position, by means of a fixing device such as a circlip (72).

6. Arrangement according to any one of the preceding claims, **characterised in that**, when the piston rod unit (14, 24) is extended by applying a pre-definable operating pressure to the cylinder chamber (12), the piston (62) of the piston accumulator (10) experiences at least a pre-tensioning against the gas pressure of the working gas stored in the accumulator housing (44).

7. Arrangement according to any one of the preceding claims, **characterised in that**, in the retracted original position, the piston (14) of the piston rod unit (14, 24) comes into contact with a surface area on the piston (62) of the piston accumulator, which is smaller than the surface area of the end face (70) of the piston (62) of the piston accumulator (10).

8. Arrangement according to any one of the preceding claims, **characterised in that** the piston rod (24) of the piston rod unit (14, 24) is designed to be stepped (40, 42) in the direction of the other connection points (30) in the cylinder housing (4).

9. Arrangement according to any one of the preceding claims, **characterised in that** the cylinder housing (4) comprises two housing covers (6, 8), which, when removed from the cylinder housing (4), allow the piston rod unit (14, 24) and piston accumulator (10) to be inserted.

10. Arrangement according to any one of the preceding claims, **characterised in that**, at its widest point, the outer diameter of the piston (14) of the piston rod unit (14, 24) is equal to the outer diameter of the accumulator housing (44) of the piston accumulator (10).

11. Arrangement according to any one of the preceding claims, **characterised in that** the piston rod unit (14, 24) and the piston accumulator (10) are received interchangeably in the cylinder housing (4).

## Revendications

1. Système cylindre-piston hydropneumatique, à utiliser notamment comme jambe de suspension de systèmes de suspension de véhicule, comprenant une enveloppe (4) de cylindre et un piston (14) guidé avec possibilité de se déplacer axialement dans son espace (12) de cylindre empli d'un fluide hydraulique, piston qui a d'un côté (20) une tige (24) de piston, qui sort d'une manière étanche d'une extrémité de l'espace (12) de cylindre, dans lequel le fluide hydraulique, qui se trouve dans l'espace (12) de cylindre du côté du fond (16) du piston, loin de la tige (24) du piston, peut être mis en liaison d'action avec un accumulateur (10) à ressort pneumatique, dans lequel l'accumulateur à ressort pneumatique est un accumulateur (10) à piston, qui est disposé dans l'enveloppe (4) du cylindre, et
dans lequel l'accumulateur (10) à piston est reçu par son enveloppe (44) d'accumulateur du côté du pourtour extérieur dans l'enveloppe (4) du cylindre,
**caractérisé**
**en ce que** l'espace (12) de cylindre a, à chaque partie d'extrémité, un point (28, 30) de raccordement pour du fluide qui, soumis à la pression, sert à faire sortir l'unité (14, 24) de piston et tige ;
**en ce que** l'un (28) des points (28, 30) de raccordement débouche dans un espace (18) pour du fluide, qui forme une partie de l'espace (12) de cylindre et qui, dans la position initiale, est laissé libre par les deux pistons (14, 62) opposés en étant voisins l'un de l'autre ; et
**en ce que** l'enveloppe (44) de l'accumulateur (10) à piston pénètre dans sa situation de montage avec un petit dépassement (76) dans un trou (32) d'enveloppe de l'un des points (28) de raccordement pour du fluide.

2. Système suivant la revendication 1, **caractérisé en ce qu'**au moins dans une position initiale de l'unité de piston et tige formée du piston (14) de la tige (24) de piston, dans laquelle celle-ci se trouve dans une position rentrée dans l'enveloppe (4) du cylindre, le piston (14) de celle-ci est en contact du côté frontal avec le piston (62) de l'accumulateur (10) à piston.

3. Système suivant la revendication 1 ou 2, **caractérisé en ce que** l'accumulateur (10) à piston s'appuie par une partie (46) de fond ayant un dispositif (58) de remplissage de gaz sur un fond (8), formant un couvercle inférieur d'enveloppe, de l'enveloppe (4) du cylindre.

4. Système suivant l'une des revendications précédentes, **caractérisé en ce que**, dans la partie de l'appui du côté du fond de l'accumulateur (10) à piston, le fond (8) de l'enveloppe (4) du cylindre a un évidement (54), dans lequel est reçue une au moins une partie du dispositif (58) en saillie de remplissage de gaz pour le côté (52) de gaz de l'accumulateur (10) à piston.

5. Système suivant l'une des revendications précédentes, **caractérisé en ce que** le piston (62) de l'accumulateur (10) à piston est maintenu à l'intérieur de l'enveloppe (44) de l'accumulateur dans sa position initiale au moyen d'un dispositif de fixation, comme d'un jonc (72) élastique.

6. Système suivant l'une des revendications précédentes, **caractérisé en ce que** lors d'une sortie, provoquée par une alimentation en une pression de travail pouvant être donnée à l'avance de l'espace (12) de cylindre, de l'unité (14, 24) de piston et tige, le piston (62) de l'accumulateur (10) à piston subit au moins une précontrainte à l'encontre de la pression du gaz de travail mis en réserve dans l'enveloppe (44) de l'accumulateur.

7. Système suivant l'une des revendications précédentes, **caractérisé en ce que** dans la position initiale rentrée, le piston (14) de l'unité (14, 24) de piston et tige vient en contact sur le piston (62) de l'accumulateur (10) à piston par une surface, qui est plus petite que la surface (70), du côté frontal, du piston (62) de l'accumulateur (10) à piston.

8. Système suivant l'une des revendications précédentes, **caractérisé en ce que** la tige (24) de piston de l'unité (14, 24) de piston et tige est constituée de manière étagée (40, 42) dans la direction de l'autre point (30) de raccordement de l'enveloppe (4) du cylindre.

9. Système suivant l'une des revendications précédentes, **caractérisé en ce que** l'enveloppe (4) du cylindre a deux couvercles (6, 8) d'enveloppe, qui éloignés de l'enveloppe (4) du cylindre, permettent l'insertion de l'unité (14, 24) de piston et tige et de l'accumulateur (10) à piston.

10. Système suivant l'une des revendications précédentes, **caractérisé en ce que** le diamètre extérieur du piston (14) de l'unité (14, 24) de piston et tige est, en son point le plus grand, égal au diamètre extérieur de l'enveloppe (44) de l'accumulateur (10) à piston.

11. Système suivant l'une des revendications précédentes, **caractérisé en ce que** l'unité (14, 24) de piston et tige et l'accumulateur (10) à piston sont logés avec possibilité de remplacement dans l'enveloppe (4) du cylindre.
